# EUROPEAN PATENT SPECIFICATION

(11) **EP 2 864 197 B1**
(45) Date of publication and mention of the grant of the patent: **14.09.2016**
(21) Application number: 13792508.7
(22) Date of filing: 26.09.2013
(51) Int. Cl.: B64C 31/036

(54) **PARAMOTOR WITH DYNAMIC TORQUE COMPENSATION**
PARAMOTOR MIT DYNAMISCHEM DREHMOMENTAUSGLEICH
PARAMOTEUR DOTÉ D'UNE COMPENSATION DE COUPLE DYNAMIQUE

(30) Priority: 01.10.2012 SK 762012
(43) Date of publication of application: 29.04.2015
(73) Proprietor: SVEC, Miroslav, 94501 Komarno (SK)
(72) Inventor: SVEC, Miroslav, 94501 Komarno (SK)
(74) Representative: KLIMENT & HENHAPEL
(86) International application number: PCT/SK2013/000011
(87) International publication number: WO 2014/055044

(56) References cited:
- EP-A2- 0 278 784
- FR-A1- 2 679 867
- US-A- 4 934 630
- US-A- 5 620 153

## Description

### Technical Field

The invention relates to aviation, specifically to powered paragliding with paramotors as the power unit. Powered paragliding uses air-inflated wings to generate lift and paramotors to generate forward thrust. The paramotor is commonly a combustion or electric engine which drives a propeller. The paramotor is usually footlaunched (carried on the pilots back as a backpack) or constructed as a lightweight trike with wheels or ski.

### Background Art

No matter what motor (combustion or electric) is used for creating the power, when the power is transmitted to the propeller it causes two effects:
1. thrust
2. torque.

THRUST is the power that pushes the paramotor forward and enables the powered paraglider to fly and even climb.

TORQUE involves Newton's Third Law of Physics - which states that for every action there is an equal and opposite reaction. If the propeller turns counter-clockwise (5) as seen from behind the propeller, torque effect causes turning of the whole paramotor clockwise (6). Rotation of the paramotor causes higher load (9) of the right paraglider risers (7) and less load on the left side (8). As a result the powered paraglider turns right instead of flying straight.

No matter how efficient the propeller is, there will always be noticeable torque effect. The more powerful the paramotor is and the faster the propeller turns, the higher the torque effect will be.

Torque effect grows exponentially with the rotation speed of the propeller.

As the powered paraglider has the tendency to turn to the right, it is more difficult to steer it precisely. The powered paraglider turns much better to the right than to the left.

The further text of patent description refers to paramotors with counter-clockwise turning propeller and torque effect causing right turn of the powered paraglider.

The text applies the opposite way for paramotor with clockwise turning propeller. The principle of innovation is valid no matter what direction the propeller turns.

### Disclosure of Invention

### Technical Problem

Presently known paramotors use weight-shift for compensating the torque effect. There are three methods of weight-shift compensation widely used:
1. Moving the center of gravity of the paramotor to the left. Moving the center of gravity can be done by asymmetric placement of the engine, where the engine as the heaviest part of paramotor is placed to the left as seen from behind, thus creating the counter-clockwise momentum.
2. The other commonly used weight-shift method is offsetting of the carabiners to the right. The left riser is therefore closer to the center of gravity of the paramotor and is loaded more, than the right riser.
   More weight load on the left riser compensates the torque effect loading the right riser.
3. Some paramotors use an adjustable anti-torque strap. It is a diagonal strap that connects the bottom right end (around the right knee) of the seat with the left risers.

This strap is adjustable and shortening of the strap transfers some part of the right leg's weight to the left riser. This causes more load of the left riser as a compensation of the torque effect.

Some paramotors combine two or all above mentioned methods to achieve sufficient torque compensation.

All three above mentioned methods of torque compensation have one common characteristics: the compensation is fixed. The weight shift is predefined by the construction of the paramotor and harness (or by the set length of the anti-torque strap).

While the torque effect grows with the power of the paramotor (more throttle = more torque effect) the weight shift compensation stays the same.

Further examples of torque compensation are provided by US 4,934,630 and US 5,620,153.

A well-engineered paramotor is balanced for level flight. i.e. mid-range engine and propeller revolutions necessary for maintaining constant level flight. If the pilots adds more power in a curve or for climbing, the torque effect grows exponentially but weight/shift compensation stays the same. The powered paraglider will turn to the right. If the pilots reduces power to idle revolutions, the torque effect will be dramatically reduced. The weight shift compensation becomes useless but is still present and the paraglider will start to turn to the left.

Same happens if the pilot uses for example a smaller wing or changes the wing profile (trimmers out for some wings with adjustable geometry). Smaller wings or wings trimmed out fly faster and need more power to maintain level flight. Such pilot will experience right turning tendency even with well designed paramotor, because he flies the paramotor at more power than the designer has expected or used as average.

Currently used torque compensation systems are therefore static, fixed by the design at some engine and propeller revolutions. If the motor is running at lower or higher revolutions, the torque compensation is not equal to torque and the powered paraglider is unable to fly straight without pilot's steering input.

Further, its easier to turn the powered paraglider in the direction of torque and more difficult in the direction opposite to propeller torque.

All above described methods of torque compensation apply also to paramotors with clockwise-turning propeller respectively.

### Technical Solution

The fast turning propeller is for security reasons protected by a round cage. There are many various designs of cage, basically consisting of the main ring and arms. Presently produced paramotors have cages made mostly from tubes (aluminium or steel). A few of them use some sort of symmetric aerodynamic profile to reduce drag of the cage.

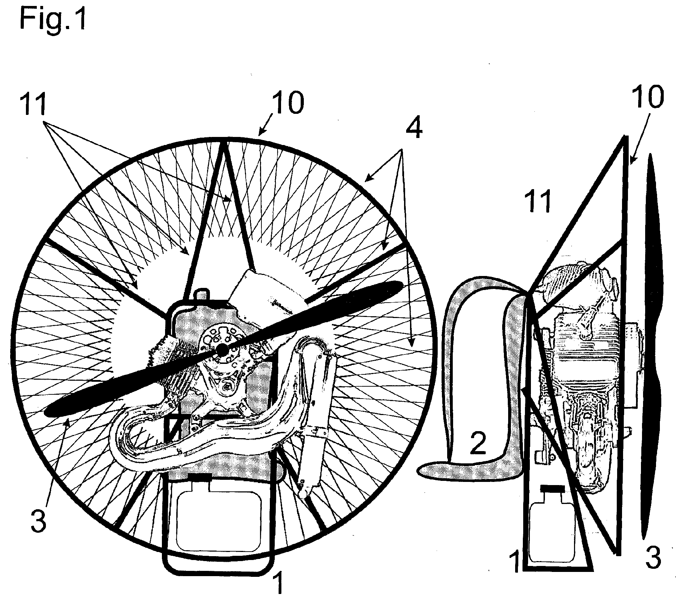

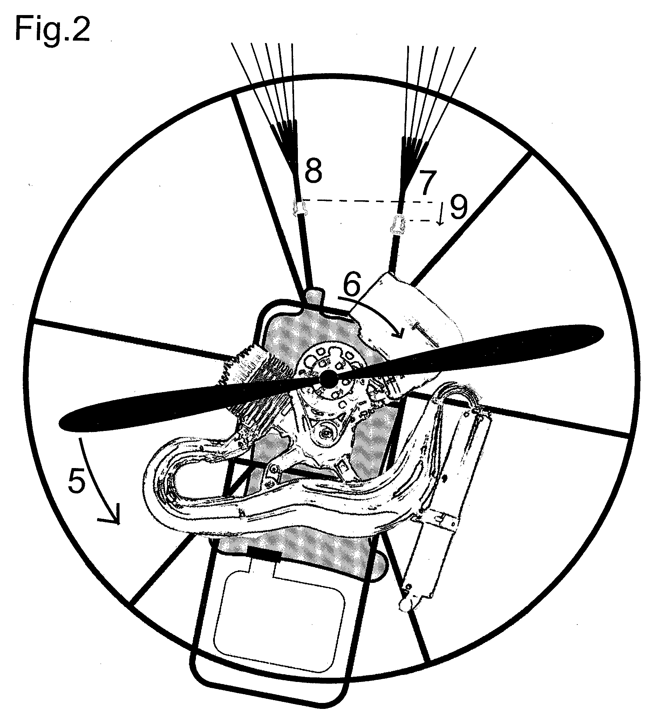

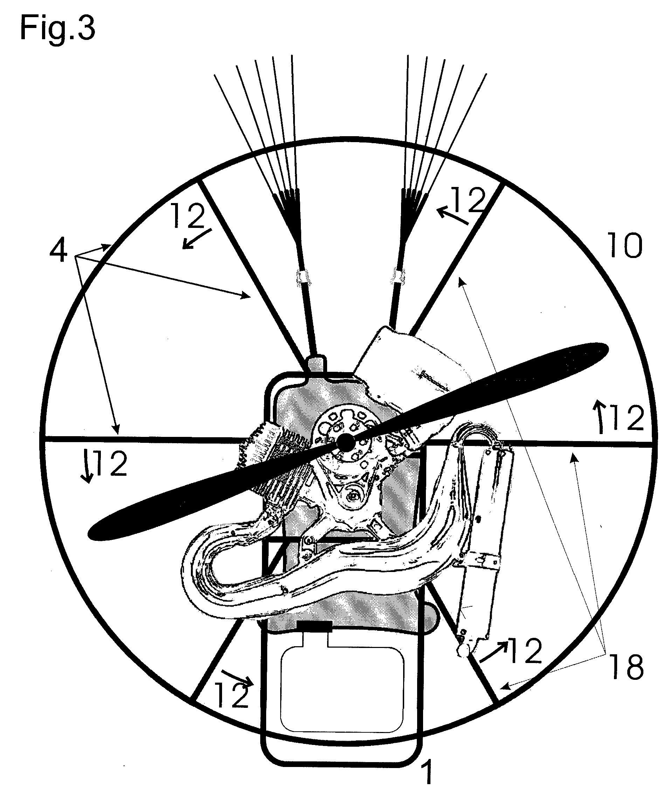

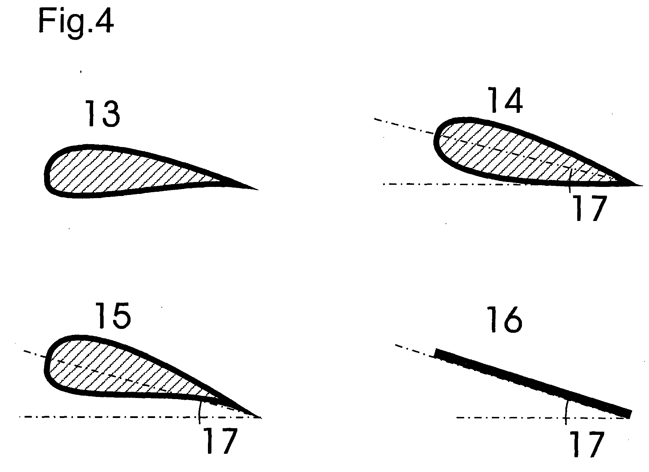

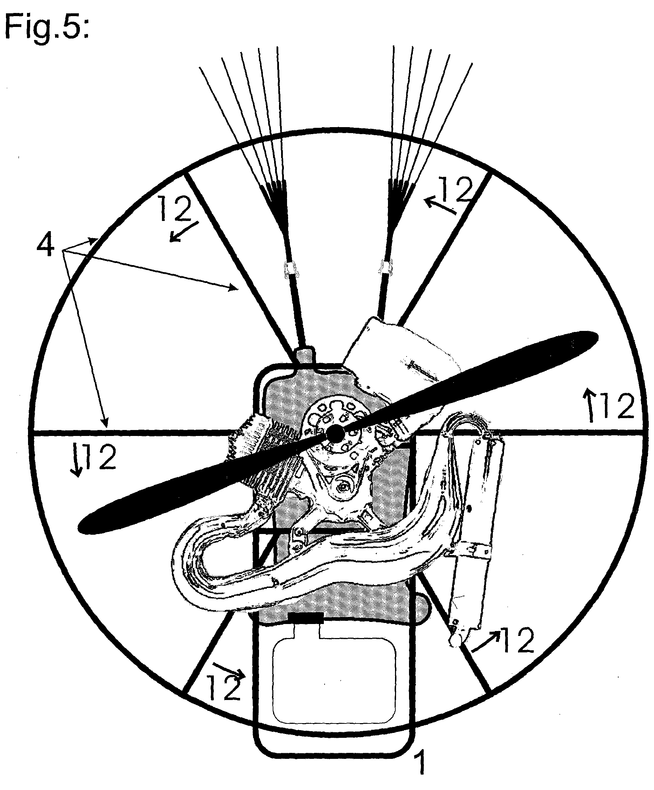

US 5 620 153 A shows a para-plane having axial vanes upstream or downstream of the ducted propeller. According to Fig. 3 these vanes are symmetric without an angle of attack, or can be adjustable.

Paramotor with dynamic torque compensation uses the air flowing through the cage (4) to generate rotational lift (12) that compensates the torque effect. This can be achieved by using properly designed surfaces on the cage and proper choice of arms (11) direction.

Surfaces made of asymmetric airfoil profile (13), symmetric profiles (14) having non-zero angle of attack (17) will generate lift when air is flowing around it.

Lift-generating surfaces placed to radial position or substantially radial position from the center of propeller rotation to the ring (10) and shaped to generate lift in the same direction will together create rotational momentum opposite to the torque effect. Perfectly radial position of the lift-generating surfaces will generate best results.

The more lift-generating surfaces with asymmetric profile and/or non-zero angle of attack are used, the stronger the rotational momentum is.

The faster the propeller turns, the more torque it creates. At the same time a faster turning propeller will create higher speed of air flowing through the cage and thus increasing the rotational lift force of the lift-generating surfaces.

The torque compensation is lower at low propeller rpm and higher at higher propeller's rpm.

My research showed, that it is possible to design the airfoil-shaped arms in the way that the rotational lift generated by the arms grows the same way as the torque effect when the propeller turns faster. As a result, compensation of the torque is equal or very close to the torque at any propeller turning speed.

The invented paramotor torque compensation is thus dynamic.

### Advantageous Effects

Paramotor with dynamic torque compensation is capable to fly straight or with minimal turning tendency without pilot input at any speed of flight, i.e at any paraglider's trim setting, with speed bar or without.

Paramotor with dynamic torque compensation is capable to fly straight or with minimal turning tendency without pilot input at both horizontal flight or ascending at full power.

Paramotor with dynamic torque compensation is capable of making sharp turns using full power equally to both sides without and its turning capability is not affected by propeller torque.

### Description of Drawings

Drawing No. 1 displays a paramotor comprising of frame 1, harness, engine and propeller 3 rotating in a cage 4. The cage 4 comprises of ring 10 and arms 11.
Drawing No.2 displays the torque effect causing rotation 6 of the paramotor and thus increased load 9 of one of the risers 7,8.
Drawing No.3 displays radially 18 positioned surfaces that generate rotational lift 12 when air flows around them.
Drawing No. 4 displays different surfaces that generate lift when air flows around them.

### Industrial Applicability

Individual examples are for illustration only and practical implementation of the invention is not limited to these examples.
Example 1: Paramotor comprising of frame 1, harness or seat 2, engine and propeller 3 rotating in a cage 4. The arms 11 of the cage 4 are made of profiles incorporating lift-generating surfaces. Arms 11 are in (close to) radial position, thus their combined lift force generates rotational momentum to compensate propeller torque.
Example 2 (not within the scope of the claims):
   Paramotor with one or more shapes (such as flaps or ailerons used on airplanes with non-zero angle of attack and/or asymmetric profile) attached to a regular cage. Such a construction will have the same dynamic torque compensation effect although with probably higher drag.
Example 3 (not within the scope of the claims):
   Paramotor with lift-generating surfaces such as flaps and ailerons attached to the cage with adjustable angle of attack. The angle of attack can be adjusted either during flight or before take-off.
Example 4 (not within the scope of the claims):
   Paramotor with lift-generating surfaces such as flaps and ailerons attached to the cage with adjustable angle of attack. The flaps are connected to the throttle wire, thus the angle of attack is automatically adjusted with throttle lever movement. The pilot by pushing the throttle control simultaneously increases engine power and increases the angle of attack of the flaps.

## Claims

1. Paramotor with dynamic torque compensation comprising:
a frame (1), a harness or seat (2), a power unit, a propeller (3) which rotates and a cage (4),
wherein said propeller (3) is protected by said cage (4),
wherein said propeller (3) is an unducted propeller,
**characterised by**
one or more surfaces (15) on said cage positioned such that when air flows over them a compensating torque is generated in an opposite direction to that of the propeller torque (6),
said cage basically consisting of a main ring (10) and arms (11),
said surfaces (15) being integrated into the arms of said paramotor cage (4), wherein the arms (11) of said cage are formed from asymmetric profile with non-zero angle of attack (15) or from symmetric profile with non-zero angle of attack (14).

2. Paramotor according to claim 1 **characterized by** said one or more surfaces (14,15) being positioned radially (18) or substantially radially relative to the axis of rotation of said propeller.

3. Paramotor according to claims 1 or 2 **characterized by** said one or more surfaces (14,15) being adapted to generate lift which in turn generates said compensating torque.

4. Paramotor according to any of the preceding claims **characterized by** said paramotor either being adapted for foot-launch or being mounted on a frame with wheels, skis or pontoons.

5. Method of dynamic torque compensation for a paramotor comprising a frame, a harness, a power unit, a propeller which rotates and a cage, wherein said propeller (3) is protected by said cage (4), wherein said propeller (3) is an unducted propeller, said method **characterized by** the steps of:
allowing air to flow over one or more surfaces (15) on said cage, said surfaces being positioned such that a compensating torque is generated in an opposite direction to that of the propeller torque (6) and said cage (4) basically consisting of a main ring (10) and arms (11), said surfaces (15) being integrated into the arms of said paramotor cage (4), wherein the arms (11) of said cage are formed from asymmetric profile with non-zero angle of attack (15) or from symmetric profile with non-zero angle of attack (14).

6. Method according to claim 5 **characterized by** said one or more surfaces (14,15) being positioned radially (18) or substantially radially relative to the axis of rotation of said propeller.

7. Method according to claims 5 or 6 **characterized by** said one or more surfaces (14,15) being adapted to generate lift which in turn generates said compensating torque.

8. Method according to any of claims 5 to 7 **characterized by** said paramotor either being adapted for foot-launch or being mounted on a frame with wheels, skis or pontoons.

## Patentansprüche

1. Paramotor mit dynamischem Drehmomentausgleich, umfassend:
einen Rahmen (1), ein Gurtzeug oder einen Sitz (2), eine Antriebseinheit, einen sich drehenden Propeller (3) und einen Käfig (4),
wobei der Propeller (3) durch den Käfig (4) geschützt wird,
wobei der Propeller (3) ein mantelloser Propeller ist, **dadurch gekennzeichnet, dass**
eine oder mehrere Oberflächen (15) auf dem Käfig derart angeordnet sind, dass, wenn Luft über sie strömt, ein ausgleichendes Drehmoment in einer Richtung erzeugt wird, die jener des Propellerdrehmoments (6) entgegengesetzt ist,
der Käfig im Wesentlichen aus einem Hauptring (10) und Armen (11) besteht,
die Oberflächen (15) in die Arme des Paramotor-Käfigs (4) integriert sind, wobei die Arme (11) des Käfigs aus einem asymmetrischen Profil mit einem Anstellwinkel von nicht null (15) oder aus einem symmetrischen Profil mit einem Anstellwinkel von nicht null (14) gebildet sind.

2. Paramotor nach Anspruch 1, **dadurch gekennzeichnet, dass** die eine oder mehreren Oberflächen (14, 15) radial (18) oder im Wesentlichen radial in Bezug auf die Drehachse des Propellers angeordnet sind.

3. Paramotor nach den Ansprüchen 1 oder 2, **dadurch gekennzeichnet, dass** die eine oder mehreren Oberflächen (14, 15) dafür geeignet sind, einen Auftrieb zu erzeugen, der seinerseits das ausgleichende Drehmoment erzeugt.

4. Paramotor nach einem der vorhergehenden Ansprüche, **dadurch gekennzeichnet, dass** der Paramotor entweder für einen Fußstart geeignet ist oder auf einem Rahmen mit Rädern, Skiern oder Schwimmkörpern montiert ist.

5. Verfahren zum dynamischen Drehmomentausgleich für einen Paramotor, umfassend einen Rahmen, ein Gurtzeug, eine Antriebseinheit, einen sich drehenden Propeller und einen Käfig, wobei der Propeller (3) durch den Käfig (4) geschützt wird, wobei der Propeller (3) ein mantelloser Propeller ist, wobei das Verfahren durch die folgenden Schritte gekennzeichnet ist:
Strömenlassen von Luft über eine oder mehrere Oberflächen (15) auf dem Käfig, wobei die Oberflächen derart angeordnet sind, dass ein ausgleichendes Drehmoment in einer Richtung erzeugt wird, die jener des Propellerdrehmoments (6) entgegengesetzt ist, und der Käfig (4) im Wesentlichen aus einem Hauptring (10) und Armen (11) besteht, wobei die Oberflächen (15) in die Arme des Paramotor-Käfigs (4) integriert sind, wobei die Arme (11) des Käfigs aus einem asymmetrischen Profil mit einem Anstellwinkel von nicht null (15) oder aus einem symmetrischen Profil mit einem Anstellwinkel von nicht null (14) gebildet sind.

6. Verfahren nach Anspruch 5, **dadurch gekennzeichnet, dass** die eine oder mehreren Oberflächen (14, 15) radial (18) oder im Wesentlichen radial in Bezug auf die Drehachse des Propellers angeordnet sind.

7. Verfahren nach den Ansprüchen 5 oder 6, **dadurch gekennzeichnet, dass** die eine oder mehreren Oberflächen (14, 15) dafür geeignet sind, einen Auftrieb zu erzeugen, der seinerseits das ausgleichende Drehmoment erzeugt.

8. Verfahren nach einem der Ansprüche 5 bis 7, **dadurch gekennzeichnet, dass** der Paramotor entweder für einen Fußstart geeignet ist oder auf einem Rahmen mit Rädern, Skiern oder Schwimmkörpern montiert ist.

## Revendications

1. Un paramoteur avec une compensation de couple dynamique comprenant :
Un cadre (1), un harnais ou siège (2), une unité d'alimentation, une hélice (3) qui tourne et une cage (4), où
Ladite hélice (3) est protégée par ladite cage (4),
Où ladite hélice (3) est une hélice sans carter externe,
**Caractérisé en ce que**
Une ou plusieurs surfaces (15) sur ladite cage positionnée de sorte que lorsque l'air leur est soufflé, un couple de compensation est généré dans un sens opposé à celui du couple de l'hélice (6),
Ladite cage se compose principalement d'une bague principale (10) et de bras (11),
Lesdites surfaces (15) étant intégrées dans les bras de ladite cage du paramoteur (4), où les bras (11) de ladite cage sont formés à partir d'un profil asymétrique avec un angle d'attaque non égal à zéro (15) ou à partir d'un profil symétrique avec un angle d'attaque non égal à zéro (14).

2. Un paramoteur selon la revendication 1, **caractérisé par le fait que** ladite ou lesdites surfaces (14, 15) sont positionnées radialement (18) ou substantiellement radialement, relativement à l'axe de rotation de ladite hélice.

3. Un paramoteur selon les revendications 1 ou 2, **caractérisé par le fait que** ladite ou lesdites surfaces (14, 15) sont adaptées pour générer une portance qui à son tour génère ledit couple de compensation.

4. Un paramoteur selon l'une des revendications précédentes **caractérisé par le fait que** ledit paramoteur est soit adapté pour un lancement au pied, soit monté sur un cadre avec des roues, des skis ou des flotteurs.

5. Une méthode de compensation de couple dynamique pour un paramoteur comprenant
Un cadre, un harnais, une unité d'alimentation, une hélice qui tourne et une cage, où ladite hélice (3) est protégée par ladite cage (4), où ladite hélice (3) est une hélice sans carter externe,
Ladite méthode **caractérisée par** les étapes de :
Laisser l'air passer sur une ou plusieurs surfaces (15) sur ladite cage, lesdites surfaces étant positionnées de sorte que
Un couple de compensation est généré dans un sens opposé à celui du couple de l'hélice (6) et
Ladite cage (4) se composant principalement d'une bague principale (10) et de bras (11),
Lesdites surfaces (15) étant intégrées dans les bras de ladite cage du paramoteur (4), où les bras (11) de ladite cage sont formés à partir d'un profil asymétrique avec un angle d'attaque non égal à zéro (15) ou à partir d'un profil symétrique avec un angle d'attaque non égal à zéro (14).

6. Une méthode selon la revendication 5 **caractérisée par le fait que** ladite ou lesdites surfaces (14, 15) sont positionnées radialement (18) ou substantiellement radialement, relativement à l'axe de rotation de ladite hélice.

7. Une méthode selon les revendications 5 ou 6 **caractérisée par le fait que** ladite ou lesdites surfaces (14, 15) sont adaptées pour générer une portance qui à son tour génère ledit couple de compensation.

8. Une méthode selon l'une des revendications 5 à 7, **caractérisée par le fait que** ledit paramoteur est adapté pour un lancement au pied ou est monté sur un cadre avec des roues, des skis ou des flotteurs.
